# EUROPEAN PATENT SPECIFICATION

(11) **EP 2 075 498 B1**
(45) Date of publication and mention of the grant of the patent: **28.03.2012**
(21) Application number: 08172534.3
(22) Date of filing: 22.12.2008
(51) Int. Cl.: F16L 41/08, F24C 13/00, F16L 41/12

(54) **Profile Assembly Device**
Profilmontagevorrichtung
Dispositif d'assemblage de profil

(30) Priority: 28.12.2007 TR 200709079
(43) Date of publication of application: 01.07.2009
(73) Proprietor: Vestel Beyaz Esya Sanayi ve Ticaret A.S., 45030 Manisa (TR)
(72) Inventor: Eryilmaz, Hasan, 35150 Izmir (TR); Kumbaraci, Ates, 35540 IzmirZMIR (TR)
(74) Representative: Cayli, Hülya

(56) References cited:
- EP-A1- 1 508 748
- DE-A1- 19 621 282
- US-A1- 2006 099 839

## Description

### Technical Field

The present invention relates to assembly devices of various duct profiles used in household-type ovens or kitchen hoods.

### Prior Art

With respect to the prior art, the assembly of duct profile of kitchen ovens is made with the aid of standard fastening means, such as bolts, rivets, nuts, clips, etc. In assembling to a surface such duct profiles, which have a hollow cross-sectional area of various sizes, it becomes necessary to use a plurality of fastening elements. For instance, a plurality of screws is used at the side flange of an annular cross-sectioned duct profile so as to surround the profile, allowing for the assembly of said duct to a desired surface. The assembly of each such standard fastening element, however, causes to substantial time losses during manufacture and disassembly. Particularly, for plants producing ovens under mass production, it is a significant matter to reduce the assembly time and costs. This matter similarly applies to enterprises providing the mounting services of such ovens.

Additionally, fastening elements such as rivets, screws, etc. cause deformations to occur on connection surfaces and damage the surface paints and coatings in appliances such as oven, in which parts of sheet metal with painted and coated surfaces are used widely. As for the ovens, in which water steam is generated due to the foodstuffs being cooked therein, any damage occurring on the paint and coatings lead to corrosion-related problems. Therefore, a fastening device has been developed with a rapid and reliable assembly/disassembly, as detailed hereunder. Another significance of a rapid and convenient assembly/disassembly operation of said ducts is that the ducts are removable for cleaning purposes. Since oils in the vapor of a cooked foodstuff deposit onto the wall of the duct, it becomes crucial that the ducts are rendered easily mountable and dismountable. Additionally, the cleaning of duct profiles having screw connections is difficult due to the difficulty in accessing around the screw connections. Furthermore, the presence of sharp screws causes danger for the users during cleaning.

The published patent application EP1508748 can be cited as an example for the duct connection of the prior art. Although a screw-free connection is provided in the connection device disclosed in this application, its production is difficult and expensive elements are employed. It is not possible to use cross-sections for the duct except the annular ones. During assembly/disassembly, the chimney duct is rotated and thus detached from the relevant connection element and is attached by means of a reverse action. Since the connection is ensured by means of a force-fit fastening tab, problems arise on the mutually-contacting surfaces due to friction, such as scratches, deformations, and damages occurring on the paint and coating.

### Brief Description of Invention

The present invention with the details given hereunder is developed for solving the aforesaid problems and provides an assembly device for ducts used for discharging the vapor of cooked foods from appliances, such as kitchen ovens or hoods. Thanks to this device, the assembly of duct profiles of different cross-sections are rapidly and easily be mounted to flat surfaces. In this context, a connection spring is attached to mutual slots formed on the surface onto which assembly is to be made. This spring also surrounds the duct profile and is used in securing the duct onto the surface. The spring is made in the form of wire and comprises two arms which can be stretched towards each other at one side. While the duct is assembled to the surface, one end of said spring is secured into a slot, whereas two arms at the other side are stretched towards each other and are attached to securing tabs provided on the surface so as to realize the assembly. Thanks to stretching and thus removing said arms from the securing tab, the duct is easily detached from the surface.

### Objective of Invention

The objective of the present invention is to produce a device, which provides a rapid and practical assembly of duct profiles of varying cross-sectional areas to corresponding surfaces, and provides a rapid and practical disassembly of such duct profiles from said surfaces.

A further objective of the present invention is to avoid any damages to occur on the connection elements or surfaces during assembly/disassembly operations by means of the device according to the present invention.

Another objective of the present invention is to provide a duct profile assembly device, which can be rapidly attached /detached, is reliable, as well as inexpensive.

Yet another objective of the present invention is to provide ease of cleaning thanks to not using any screw-connection.

### Description of Figures

Illustrative embodiments of the subject profile assembly device are illustrated in annexed figures briefly described hereunder.
Figure 1 is a perspective schematic view of a profile assembly device prior to assembly.
Figure 2 is a perspective schematic view of another profile assembly device prior to assembly.
Figure 3 is a perspective schematic view of a profile assembly device in the assembled form.
Figure 4 is a perspective schematic view of a profile assembly device in the assembled form.

The parts in said figures are individually enumerated as following.
Securing wire (1)
Duct profile (2)
Securing surface (3)
Arm (11, 11')
Tip section (12)
Body section (13, 13')
Flange (23)
Edge (23b)
Securing tab (31, 31')
Slot (32)
Aperture (32a)
Hole (33)
Slot (33a)
Edge (33b)

### Description of Invention

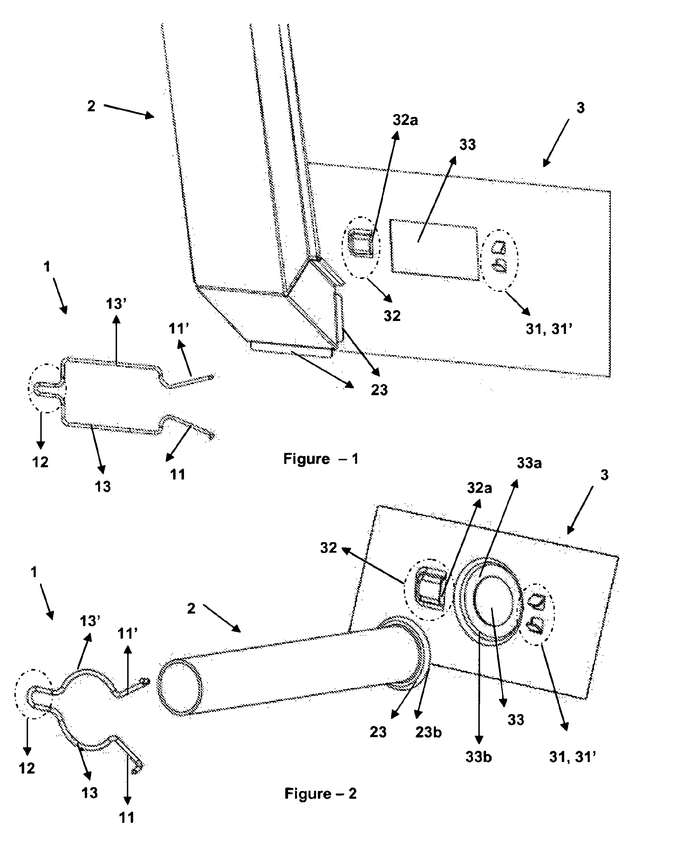

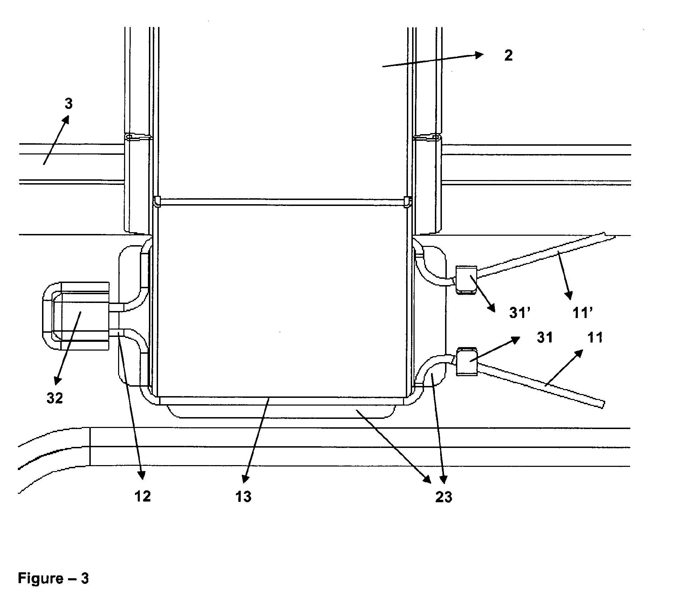

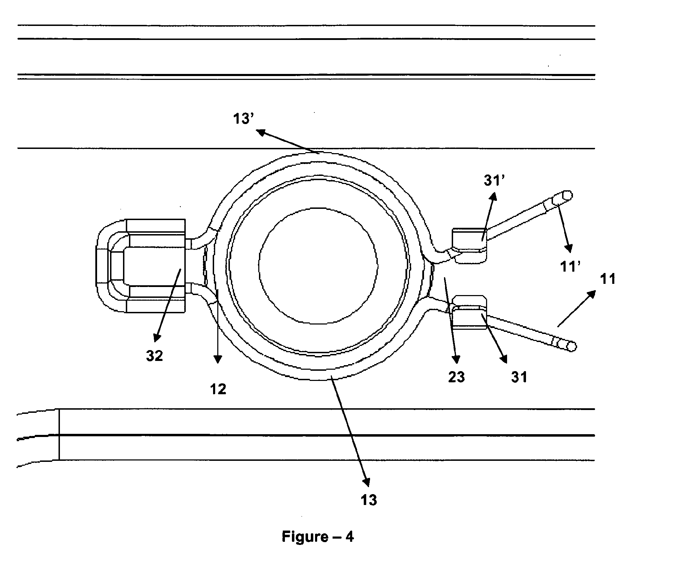

The profile assembly device illustrated in figures 1 to 4 comprises the connection elements of ducts used for discharging the vapor of cooked foods from kitchen appliances, such as ovens or hoods. In this connection, hollow duct profiles (2) of varying cross-sections are secured to flat surfaces (3) provided with duct holes (33) so as to correspond to said hole (33).

For this purpose, at both mutual sides of the hole (33) on the securing surface (3) are provided respectively a slot (32) and fixed securing tabs (31, 31'), to which a securing wire (1) is to be attached. As illustrated in figures 1 to 4, a slot (32) extends outwardly from the surface (3), and on the side thereof (32) facing the hole (33) is provided an aperture (32a) by which said wire (1) can be introduced into the slot (32) only from the side (or in parallel to the surface (3)). It is also possible to embody this slot (32) in a manner that would penetrate into the surface. Put differently, the slot (32) can also be embodied in the form of a recess or hole. As for the aperture (32a), it can be disposed so as to face any direction, which would allow the introducing of said wire (1) therein. The securing tabs (31, 31') are disposed next to the hole (33) and opposite to the slot (32). To this mutually-disposed couple of securing tabs (31, 31'), one each arm (11, 11') of the wire is attached (1). Alternatively, it is possible to make use of a couple of recesses on said surface (3) in place of this couple of securing tabs (31, 31'), as long as the curved tips of said arms (11, 11') can be introduced therein.

One of the significant points of the present invention is the fact that it allows for a simple assembly of duct profiles (2) of various cross-sectional areas. Figures 1 to 4 exemplify this point by means of duct profiles with annular and rectangular cross-sections. It is further possible to use any kind of hollow duct profiles, in addition to these two cross-sections. In other words, hollow duct profiles (2) of polygonal structures (circular or elliptical geometries can also be considered as polygonal structures) in the most general sense can be used with the present invention. A flange (23) surrounding the profile (2) is provided at one end of the profile, in order to lean the duct profile (2) against around the hole (33) on the surface (3) during assembly. This flange (23) can both be leaned against the surface (3) directly, and be disposed in a slot (33a) (Figure 2) on the surface (3). By embodying the edge (33b) of the slot (33a) so as to surround the edge (23b) of said flange (23), any possible lateral displacement of the duct (2) on the surface (3) is restricted. By making use of the securing wire (1) with the details given hereunder, the detachment of the duct (2) from the surface (3) is prevented.

The securing wire (1) comprises two arms (11, 11'), stretchable towards to or away from each other; a double-arm body part (13, 13'), wherefrom each arm (11, 11') extend individually, said body part (13, 13') being formed so as to surround said duct profile (2) during use; and a tip section (12) in the form of an extension, which is formed in the extension of said body part (13, 13') where the arms of said part (13, 13') emerge into each other. The securing wire (1) can either be formed by bending a single-piece wire, or be made from at least two separate parts, which are brought together at the tip section (12) by means of various mechanical joining methods.

When the duct profile (2) is assembled to the surface (3), the tip section (12) of the securing wire (1) becomes settled into the slot (32). Meantime, the duct flange (23) leans against the surface (3) so as to surround the hole (33) provided at the surface. In this position, the body part (13, 13') of the securing wire (1) surrounds the profile (2). The arms (11, 11') of said body part are stretched towards each other (or away from each other in an alternative embodiment of said securing wire) and driven underneath said securing tabs (31, 31'), so that the securing wire (1) is attached to said securing tabs (31, 31') and embraces the profile (2) tightly and leans against the flange (23) concurrently. Said securing tabs (31, 31') are formed so as to prevent the removal of said arms (11, 11') from the surface. The securing wire (1) can be disassembled by stretching the arms (11, 11') towards each other (or at the opposite direction) so as to remove them from the securing tabs (31, 31'). Thanks to this securing manner, the body part (13, 13') leaning against the profile flange (23) makes the profile (2) become jammed between the wire (1) and surface (3).

## Claims

1. An assembly device of duct profiles used for discharging the vapor of cooked foods from kitchen appliances, comprising a hollow duct profile (2); a securing surface (3) provided with a duct hole (33) on the side thereof facing the profile (2) so as to receive the latter (2); and a securing wire (1), **characterized by** further comprising
a flange (23) at one end of the profile (2), which leans against the surface (3) so as to surround the hole (33);
a slot (32) and a couple of fixed securing tabs (31, 31') provided on the surface (3);
and in that said securing wire (1) comprises two arms (11, 11') attached to said securing tabs (31, 31'); a double-arm body part (13, 13'), wherefrom each said arms (11, 11') extend individually, said body part (13, 13') being formed so as to surround said duct profile (2) and lean against the flange (23); and a tip section (12) in the form of an extension, which is formed in the extension of said body part (13, 13') where the arms of said part (13, 13') emerge into each other.

2. A device according to Claim 1, **characterized in that** the slot (32) is formed so as to extend outwardly from the surface (3) and is provided with an aperture (32a) on one side thereof, by means of which said tip section (12) can be introduced into the slot (32).

3. A device according to Claim 1, **characterized in that** said slot (32) is made in the form of a recess into the surface (3).

4. A device according to Claim 1, **characterized in that** said slot (32) is in the form of a bore.

5. A device according to Claim 1, **characterized in that** the slot (32) and the couple of securing tabs (31, 31') are disposed at the opposite sides of the hole (33).

6. A device according to Claim 1, **characterized in that** said arms (11, 11') are stretchable so as to be introduced underneath the securing tabs (31, 31').

7. A device according to Claim 6, **characterized in that** said arms (11, 11') are stretchable towards each other.

8. A device according to Claim 6, **characterized in that** said arms (11, 11') are stretchable away from each other.

9. A device according to Claim 1, **characterized in that** said duct profile (2) has a polygonal cross-section.

10. A device according to Claim 1, **characterized in that** said duct profile (2) has a circular cross-section.

11. A device according to Claim 1, **characterized in that** said duct profile (2) has an elliptic cross-section.

12. A device according to Claim 1, **characterized in that** said surface (3) is provided with a couple of recesses, into which the curved ends of said arms (11, 11') are introduced.

13. A device according to Claim 1, **characterized in that** said securing wire (1) is single-piece.

14. A device according to Claim 1, **characterized in that** said securing wire (1) comprises at least two parts, which are brought together at the tip section (12) by means of various mechanical joining methods.

15. A device according to Claim 1, **characterized in that** said flange (23) is disposed in a slot (33a) provided on the surface (3).

16. A device according to Claim 15, **characterized in that** the edge (33b) of the slot (33a) is made so as to embrace the edge (23b) of said flange (23), for avoiding any possible lateral displacement of the duct (2) on the surface (3).

## Patentansprüche

1. Montagevorrichtung für Führungsprofile genutzt zum Ablassen des Dampfes gekochter Nahrungsmittel aus Küchengeräten, umfassend ein hohles Führungsprofil (2), eine Befestigungsfläche (3) versehen mit einer Führungsöffnung (33) an deren dem Profil (2) gegenüberliegenden Seite, um das letztgenannte Führungsprofil (2) aufzunehmen, und einen Sicherungsdraht (1), **dadurch gekennzeichnet, dass** die Vorrichtung des Weiteren umfasst
- einen Flansch (23) an einem Ende des Profils (2), der an der Fläche (3) lehnt und die Öffnung (33) umgibt;
- einen Schlitz (32) und ein Paar fester Befestigungslaschen (31,31') vorgesehen an der Fläche (3);
- wobei der Sicherungsdraht (1) zwei Arme (11,11'), befestigt an den Befestigungsklappen (31, 31'), einen doppelarmigen Körperabschnitt (13,13'), von dem sich die Arme (11,11') individuell erstrecken, wobei der Körperabschnitt (13,13') derart ausgebildet ist, dass er das Führungsprofil (2) umgibt und gegen den Flansch (23) lehnt, und einen Spitzenabschnitt (12) in Form einer Verlängerung umfasst, die in Verlängerung des Körperabschnitts (13,13') ausgebildet ist, wo die Arme des Abschnitts (13,13') zusammenlaufen.

2. Vorrichtung nach Anspruch 1, **dadurch gekennzeichnet, dass** der Schlitz (32) so ausgebildet ist, dass er sich von der Fläche (3) nach außen erstreckt und an einer Seite mit einer Öffnung (32a) versehen ist, über die der Spitzenabschnitt (12) in den Schlitz (32) eingeleitet werden kann.

3. Vorrichtung nach Anspruch 1, **dadurch gekennzeichnet, dass** der Schlitz (32) in Form einer Ausnehmung in der Fläche (3) ausgebildet ist.

4. Vorrichtung nach Anspruch 1, **dadurch gekennzeichnet, dass** der Schlitz (32) in Form einer Bohrung vorliegt.

5. Vorrichtung nach Anspruch 1, **dadurch gekennzeichnet, dass** der Schlitz (32) und das Befestigungslaschenpaar (31,31') an gegenüberliegenden Seiten der Öffnung (33) angeordnet sind.

6. Vorrichtung nach Anspruch 1, **dadurch gekennzeichnet, dass** die Arme (11,11') dehnbar sind, um unter die Befestigungslaschen (31,31') geführt zu werden.

7. Vorrichtung nach Anspruch 6, **dadurch gekennzeichnet, dass** die Arme (11,11') in Richtung zueinander dehnbar sind

8. Vorrichtung nach Anspruch 6, **dadurch gekennzeichnet, dass** die Arme (11,11') voneinander fort dehnbar sind.

9. Vorrichtung nach Anspruch 1, **dadurch gekennzeichnet, dass** das Führungsprofil (2) einen polygonalen Querschnitt besitzt.

10. Vorrichtung nach Anspruch 1, **dadurch gekennzeichnet, dass** das Führungsprofil (2) einen runden Querschnitt besitzt.

11. Vorrichtung nach Anspruch 1, **dadurch gekennzeichnet, dass** das Führungsprofil (2) einen elliptischen Querschnitt besitzt.

12. Vorrichtung nach Anspruch 1, **dadurch gekennzeichnet, dass** die Fläche (3) mit einem Paar Ausnehmungen versehen ist, in die die gebogene Enden der Arme (11,11') eingeführt sind.

13. Vorrichtung nach Anspruch 1, **dadurch gekennzeichnet, dass** der Sicherungsdraht (1) einstückig ist.

14. Vorrichtung nach Anspruch 1, **dadurch gekennzeichnet, dass** der Sicherungsdraht (1) wenigstens zwei Abschnitte umfasst, die im Spitzenabschnitt (12) mittels verschiedener mechanischer Verbindungsmethoden zueinander gebracht sind.

15. Vorrichtung nach Anspruch 1, **dadurch gekennzeichnet, dass** der Flansch (23) in einem in der Fläche (3) Schlitz (33a) vorgesehenen angeordnet ist.

16. Vorrichtung nach Anspruch 15, **dadurch gekennzeichnet, dass** die Kante (33b) des Schlitzes (33a) so ausgebildet ist, dass sie die Kante (23b) des Flansches (23) umrahmt, um einen möglichen seitlichen Versatz der Führung (2) an der Fläche (3) zu vermeiden.

## Revendications

1. Dispositif d'assemblage de profils de conduit utilisé pour évacuer la vapeur d'aliments cuisinés issue d'appareils de cuisine, comprenant un profil de conduit creux (2), une surface d'assujettissement (3) pourvue d'un trou de conduit (33) sur son côté en regard du profil (2) de façon à recevoir ce dernier (2) ; et un fil d'assujettissement (1), **caractérisé en ce qu'**il comprend en outre
une bride (23) à une extrémité du profil (2), qui s'appuie contre la surface (3) de façon à entourer le trou (33) ;
une fente (32) et deux pattes d'assujettissement (31, 31') fixes disposées sur la surface (3) ;
et **en ce que** ledit fil d'assujettissement (1) comprend deux bras (11, 11') attachés auxdites pattes d'assujettissement (31, 31') ; une partie de corps à double bras (13, 13'), de laquelle chacun desdits bras (11, 11') s'étend individuellement, ladite partie de corps (13, 13') étant formée de façon à entourer ledit profil de conduit (2) et à s'appuyer contre la bride (23) ; et une section d'embout (12) sous la forme d'une extension, qui est formée dans l'extension de ladite partie de corps (13, 13') où les bras de ladite partie (13, 13') émergent l'un dans l'autre.

2. Dispositif selon la revendication 1, **caractérisé en ce que** la fente (32) est formée de façon à s'étendre vers l'extérieur de la surface (3) et est pourvue d'une ouverture (32a) sur un côté de cette dernière, au moyen de laquelle ladite section d'embout (12) peut être introduite dans la fente (32).

3. Dispositif selon la revendication 1, **caractérisé en ce que** ladite fente (32) est faite sous la forme d'un évidement dans la surface (3).

4. Dispositif selon la revendication 1, **caractérisé en ce que** ladite fente (32) se présente sous la forme d'un alésage.

5. Dispositif selon la revendication 1, **caractérisé en ce que** la fente (32) et les deux pattes d'assujettissement (31, 31') sont disposées sur les côtés opposés du trou (33).

6. Dispositif selon la revendication 1, **caractérisé en ce que** lesdits bras (11, 11') sont étirables de façon à être introduits en dessous des pattes d'assujettissement (31, 31').

7. Dispositif selon la revendication 6, **caractérisé en ce que** lesdits bras (11, 11') sont étirables l'un vers l'autre.

8. Dispositif selon la revendication 6, **caractérisé en ce que** lesdits bras (11, 11') sont étirables en éloignement l'un de l'autre.

9. Dispositif selon la revendication 1, **caractérisé en ce que** ledit profil de conduit (2) a une section polygonale.

10. Dispositif selon la revendication 1, **caractérisé en ce que** ledit profil de conduit (2) a une section circulaire.

11. Dispositif selon la revendication 1, **caractérisé en ce que** ledit profil de conduit (2) a une section elliptique.

12. Dispositif selon la revendication 1, **caractérisé en ce que** ladite surface (3) est pourvue de deux évidements, dans lesquels les extrémités incurvées desdits bras (11, 11') sont introduites.

13. Dispositif selon la revendication 1, **caractérisé en ce que** ledit fil d'assujettissement (1) est d'un seul tenant.

14. Dispositif selon la revendication 1, **caractérisé en ce que** ledit fil d'assujettissement (1) comprend au moins deux parties, qui sont réunies au niveau de la section d'embout (12) au moyen de diverses méthodes de jonction mécanique.

15. Dispositif selon la revendication 1, **caractérisé en ce que** ladite bride (23) est disposée dans une fente (33a) disposée sur la surface (3).

16. Dispositif selon la revendication 15, **caractérisé en ce que** le bord (33b) de la fente (33a) est fabriqué de sorte à épouser le bord (23b) de ladite bride (23), pour éviter tout déplacement latéral possible du conduit (2) sur la surface (3).
